# EUROPÄISCHE PATENTSCHRIFT

(11) **EP 2 768 751 B1**
(45) Veröffentlichungstag und Bekanntmachung des Hinweises auf die Patenterteilung: **20.04.2016**
(21) Anmeldenummer: 11810549.3
(22) Anmeldetag: 05.12.2011
(51) Int. Cl.: B65G 51/06

(54) **HÜLSE FÜR EINE ROHRPOSTANLAGE MIT EINEM HÜLSENROHR**
SLEEVE FOR A PNEUMATIC DISPATCH SYSTEM HAVING A SLEEVE TUBE
CARTOUCHE POUR SYSTÈME DE POSTE PNEUMATIQUE COMPORTANT UN TUBE DE CARTOUCHE

(30) Priorität: 20.10.2011 AT 5702011
(43) Veröffentlichungstag der Anmeldung: 27.08.2014
(73) Patentinhaber: Ing. Sumetzberger GmbH, 1110 Wien (AT)
(72) Erfinder: FRIEDRICH, Peter, A-1040 Wien (AT)
(74) Vertreter: Müllner, Martin
(86) Internationale Anmeldenummer: PCT/AT2011/050036
(87) Internationale Veröffentlichungsnummer: WO 2013/056281

(56) Entgegenhaltungen:
- EP-A1- 0 508 048
- WO-A1-2010/136538
- DE-B- 1 056 541
- DE-C- 519 298

## Beschreibung

### Technisches Gebiet

Die vorliegende Erfindung betrifft Hülse für eine Rohrpostanlage mit einem Hülsenrohr, das mit mindestens einem Deckel, der aus mehreren Deckelsektoren gebildet ist, verschlossen ist, wobei die Hülse mittels eines Gleitrings öffenbar und schließbar ist, wobei der Gleitring parallel zur Längsachse der Hülse bewegbar ist; die Deckelsektoren aus je zwei Teilbereichen bestehen, nämlich aus einem ersten Teilbereich und einem zweiten Teilbereich; die ersten Teilbereiche in Schließstellung das Hülsenrohr abschließen; die zweiten Teilbereiche an die ersten Teilbereiche angeformt sind und das Hülsenrohr in einem Endabschnitt umfassen.

### Stand der Technik

Eine derartige Hülse ist aus der EP 508048 A --. bekannt. Hier umfassen in Schließstellung die Riegelmittel den Deckel an einer Umfangfläche und mindestens eine Schwenkachse des Deckels liegt in unmittelbarer Nähe der Umfangfläche des Deckels. Durch Verschieben der Riegelmittel parallel zur Rohrlängsachse wird der Deckel geöffnet und geschlossen. Bei dieser Hülse ist die Schwenkachse des Deckels von der Längsachse des Rohres weniger weit entfernt als das Rohr selbst. Dadurch ist das Rohr auch nach vollständigem Öffnen des Deckels teilweise durch die Schwenkachse und das die Schwenkachse umgebende Material verschlossen. Dadurch ist diese Hülse für die Schwerrohrpost geeignet, aber für Einsatzgebiete mit geringem Rohrdurchmesser einer Rohrpostanlage nicht geeignet. Der verbleibende Platz für die zu transportierenden Produkte, die auch in die Hülse eingbringbar und wieder aus dieser herausnehmbar sein müssen, ist bei dieser Art von Hülse bei geringem Rohrdurchmesser zu gering. Außerdem wird bei dieser Hülse gänzlich auf Federkraft verzichtet, sodass der Deckel in der Schließstellung nicht mit Kraft in dieser Stellung gehalten ist. Dadurch kann es zum Einklemmen von z.B. Probenbeuteln in einem Spielraum zwischen den Deckelsektoren kommen.

Aus der WO 2010/136538 --. ist eine gattungsgemäße Hülse bekannt, bei der der Deckel bzw. die Deckelsektoren drehbar gelagert sind, wobei die Scharniere in einem Gleitring angeordnet sind. Dies erfordert eine gewisse Dicke des das Rohr umfassenden Gleitrings. Nachteilig ist daher auch bei dieser Hülse, dass der Raum für den Hülseninhalt bei kleinem Rohrdurchmesser der Rohrpostanlage mitunter nicht ausreichend ist. Außerdem ist eine Drehfeder am Scharnier eingebaut, die nur eine unzureichende Zuhaltekraft besitzt. Daher kann es zu ungewolltem Öffnen der Hülse sowohl im Rohr als auch in der Station der Rohrpostanlage kommen. Es kann auf diese Art auch zu diversen anderen Fehlern wie Einklemmen von Probenbeuteln, Verlust von Proben oder einer Blockierung der Hülse im Rohr kommen.

### Darstellung der Erfindung

Es ist Aufgabe der vorliegenden Erfindung, die Hülse der eingangs genannten Art so zu verbessern, dass die Deckelsektoren im geschlossenen Zustand der Hülse in Position gehalten werden und kein Spiel aufweisen. Außerdem soll die Hülse für kleine Rohrdurchmesser geeignet sein. Weiters soll eine Drehfeder für die Zuhaltekraft auf die Deckelsegmente vermieden werden, wodurch das Ermüden der Drehfeder ausgeschlossen wird und zusätzlich auch noch Kosten gespart werden können.

Diese Aufgaben werden durch eine Hülse der eingangs genannten Art erfindungsgemäß dadurch gelöst, dass vom zweiten Teilbereich aus zumindest je eine Bandfeder anschließt und in einem Gleitring fixiert ist, der das Hülsenrohr umschließt; und dass ein Klemmring die zweiten Teilbereiche der Deckelsektoren in Schließposition umgreift und so die Deckelsektoren geschlossen hält. Die Verbindung der Deckelsektoren mit dem Gleitring mit einer Bandfeder kann Montagekosten sparen, da die Bandfeder als Spritzgussteil direkt mit dem Deckelsektor mitgespritzt werden kann. Der Klemmring presst in der Schließposition die Deckelsektoren in Richtung Längsachse der Hülse.

Als günstig erweist sich, wenn der Klemmring rohrseitig Rastvorsprünge aufweist und die Deckelsektoren im zweiten Teilbereich gegengleiche Rastvertiefungen aufweisen bzw. der Klemmring die Vertiefungen aufweist und die Deckelsektoren die Vorsprünge aufweisen, sodass in Schließstellung die Rastvorsprünge in den Rastvertiefungen einrasten. Durch dieses Einrasten ist in Schließstellung eine definierte, gleich bleibende Lage des Klemmrings sichergestellt.

Bevorzugt weist der Gleitring mindestens eine Ausnehmung mit einer Begrenzung auf der vom Ende des Hülsenrohrs abgewandten Seite auf und der Klemmring besitzt rohrseitig mindestens eine Verdickung, die in der Ausnehmung achsparallel verschiebbar ist, wobei beim Öffnen die Verdickung auf dieser Begrenzung der Ausnehmung des Gleitrings in Aufsitz kommt und in der Offenstellung auf dieser Begrenzung aufsitzt. Durch das Vorsehen des eben genannten Merkmals wird eine sichere Mitnahme des Gleitrings und in weiterer Folge der Bandfedern und der Deckelsektoren durch den Klemmring gewährleistet.

Als günstig erweist sich, wenn der Gleitring mindestens eine Ausnehmung aufweist, die achsparallele Begrenzungen aufweists, und der Klemmring rohrseitig zumindest eine Verdickung besitzt, die in der zumindest einen Ausnehmung des Gleitrings in Umfangsrichtung formschlüssig eingreift. Durch diesen Formschluss wird ein Verschieben des Gleitrings gegen den Klemmring in Umfangsrichtung verhindert.

Vorzugsweise weist der Klemmring eine zum Rohrumfang parallele Nut auf der dem Rohr abgewandten Seite auf. Durch diese Nut wird ein sicheres formschlüssige Eingreifen und anschließendes Festhalten des Klemmrings durch ein Festhalteelement in der Rohrpoststation erreicht. Diese Nut bietet daher eine wichtige Voraussetzung zum automatischen Öffnen der Hülse.

Vorteilhaft ist, wenn die Bandfedern im Gleitring mit einem unlösbaren Schnappverschluss gehalten sind. Dies stellt eine besonders einfache und kostengünstige Verbindung zwischen Bandfeder und Gleitring dar.

Als vorteilhaft erweist sich weiters, wenn an den einzelnen Deckelsektoren im zweiten Teilbereich Hülsenringteile aufgebracht sind. Beim Transport der Hülse in der Rohrpostanlage treten oft hohe Geschwindigkeiten und Richtungsänderungen auf. Durch das Vorsehen von Hülsenringen wird die seitliche Krafteinwirkung auf die Hülse gedämpft.

Damit die verschiedenen Hülsentypen bzw. der verschiedene Inhalt der einzelnen Hülsen unterschieden werden kann, weist mindestens ein Deckelsektor im zweiten Teilbereich eine Deckelvertiefung auf, die zur Aufnahme eines Transponders geeignet ist. Transponder im Deckel machen die Unterscheidung möglich.

Weiters können die Deckelsektoren mit Dichtungen versehen sein, wodurch das Auslaufen etwaiger Flüssigkeiten verhindert wird.

Als günstig erweist es sich, wenn das Hülsenrohr unmittelbar über dem Gleitring in Schließstellung einen Wulst aufweist. Dadurch ist eine Endposition des Gleitrings beim Schließen festgelegt und es wird ein Abheben des Deckels vom Hülsenrohr verhindert.

Bei einer bevorzugten Ausführungsform ist vorgesehen, dass der Gleitring im vom Ende des Hülsenrohrs fernen Bereich Befestigungsausnehmungen, die zur Aufnahme von Befestigungsmitteln zur Befestigung der Bandfedern geeignet sind, besitzt. Die Bandfedern können mit dem Gleitring nicht nur durch eine unlösbare Schnappverbindung verbunden sein. Die Verbindung kann auch mit Schrauben, Nieten und dergleichen erfolgen. Auch die Verbindung der Bandfedern mit den Deckelsektoren kann über eben solche Schrauben, Nieten und dergleichen sichergestellt werden. Die Bandfedern selbst müssen nicht zwangsweise Spritzgussteile sein. Es kann sich hierbei um Federstahl, Gummi oder andere biegbare Materialien handeln.

### Kurze Beschreibung der Zeichnungen

Anhand der beiliegenden Figuren wird die vorliegende Erfindung näher erläutert.

Es zeigt:
Fig. 1 eine perspektivische Ansicht eines Abschnitts einer erfindungsgemäßen Hülse mit geschlossenem Deckel;
Fig. 2 dasselbe, wobei ein Hülsenringteil abgenommen ist;
Fig. 3 diese Hülse mit geöffnetem Deckel;
Fig. 4 einen Achsenschnitt durch die Hülse gemäß den Fig. 1 bis3 mit geschlossenem Deckel; und
Fig. 5 dasselbe mit geöffnetem Deckel.

### Weg(e) zur Ausführung der Erfindung

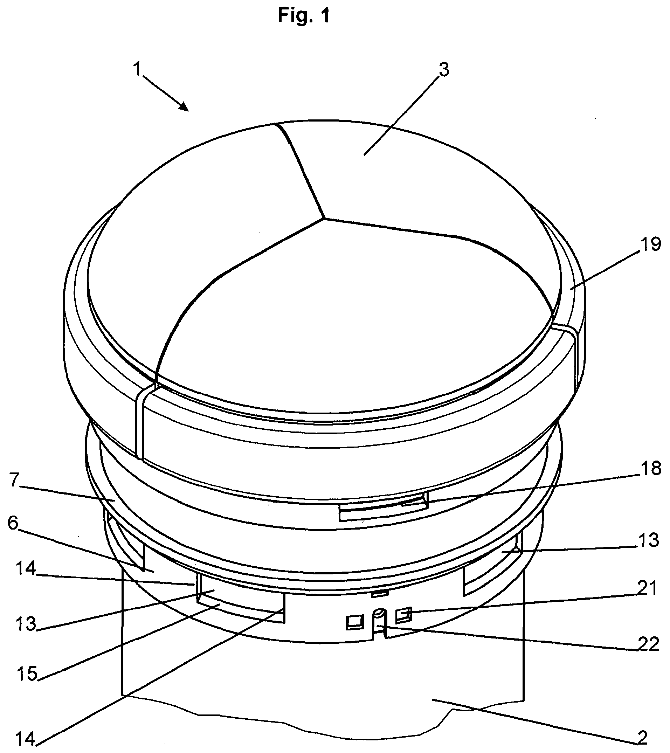

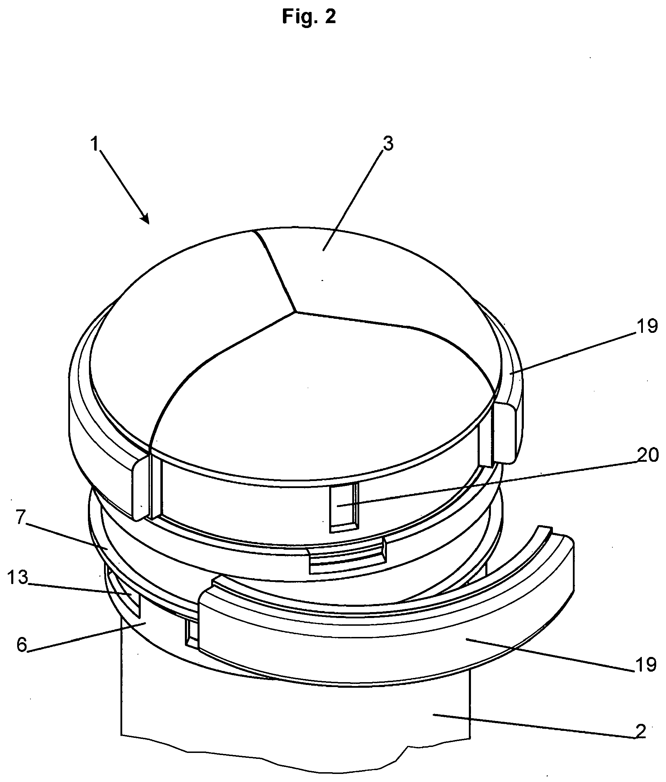

In Fig. 1 ist eine erfindungsgemäße Hülse 1 mit Hülsenrohr 2 und aufgesetztem, öffenbaren Deckel, gebildet aus mehreren Deckelsektoren 3, gezeigt, wobei ein Klemmring 7 einen Gleitring 6 umfasst. Fig. 2 zeigt die gleiche Ansicht, wobei ein Hülsenringteil 19 abgenommen ist, wodurch eine Deckelvertiefung 20, die zur Aufnahme eines Transponders geeignet ist, sichtbar ist.

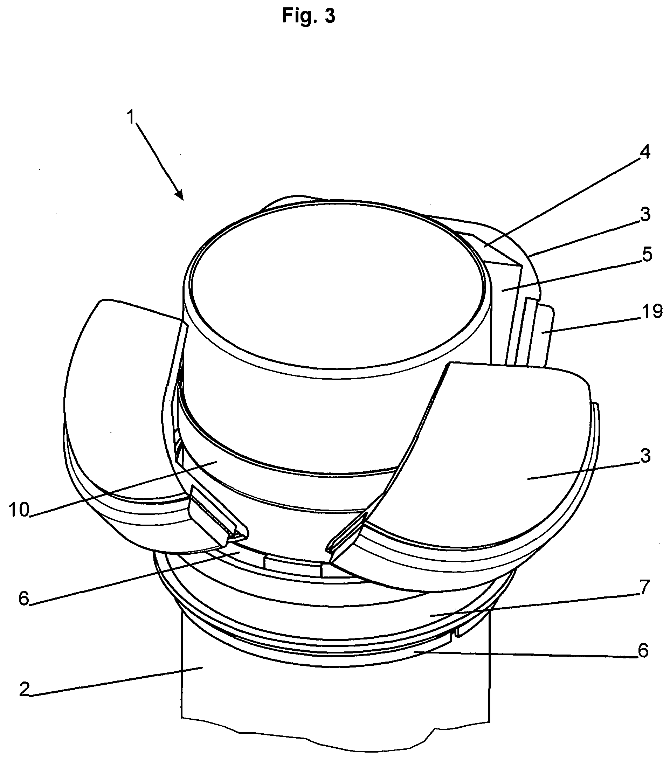

Fig. 3 zeigt die geöffnete Hülse 1, wobei bei der gezeigten Ausführungsform die ersten und zweiten Teilbereiche 4 und 5 der Deckelsektoren 3 normal aufeinander stehen.

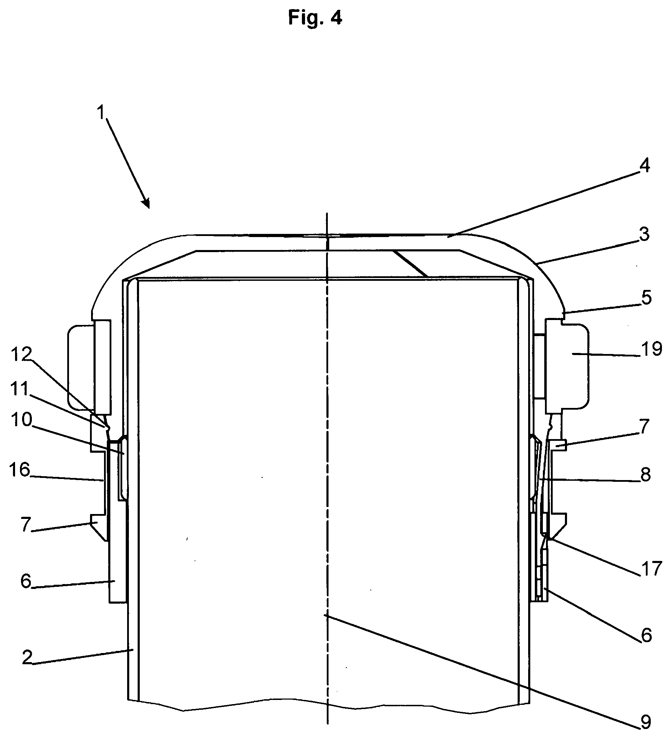

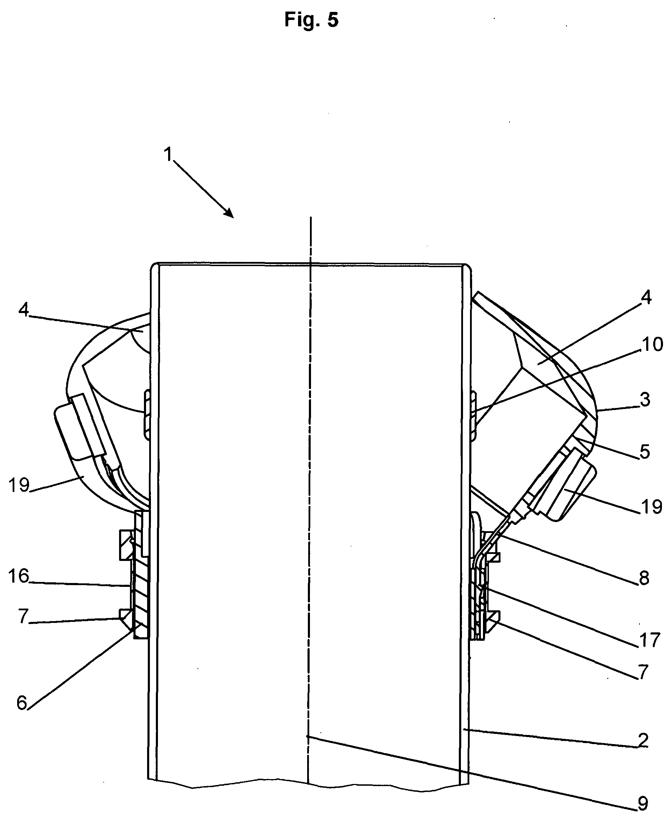

Anhand von Fig. 4 und Fig. 5 wird die Hülse näher erläutert. Auf dem Hülsenrohr 2 mit seiner Längsachse 9 ist zumindest an einem Ende ein automatisch öffenbarer Deckel angebracht. Die einzelnen Deckelsektoren 3 sind über Bandfedern 8 mit einem Gleitring 6 verbunden. Diese Bandfedern 8 sind an den Deckel angeformt und münden in einem unlösbaren Schnappverschluss 17 im Gleitring 6. Ein Klemmring 7 presst in Schließstellung die zweiten Teilbereiche 5 der Deckelsektoren 3 samt Bandfedern 8 in Richtung Längsachse 9. Dadurch werden auch die ersten Teilbereiche 4 in Richtung der Längsachse 9 gedrückt, wodurch die einzelnen Deckelsektoren 3 aneinander gepresst werden und die Hülse 1 verschlossen ist. Durch Dichtungen kann das Auslaufen von Flüssigkeiten verhindert werden. Die Bandfedern 8 benötigen im Gegensatz zu Drehfedern keinen zusätzlichen Raum in radialer Richtung zur Unterbringung des Scharniers.

Wie fast jede Hülse besitzt auch diese einen Hülsenring, der im vorliegenden Fall durch Hülsenringteile 19, die auf die einzelnen Deckelsektoren 3 direkt aufgesetzt sind, realisiert ist.

Um ein ungewolltes Verschieben des Klemmrings 7 zu verhindern, ist eine Rastverbindung 11, 12 zwischen Deckelsektoren 3 und Klemmring 7 vorgesehen. In Fig. 4 sind die Rastvorsprünge 11 des Klemmrings 7 in den Rastvertiefungen 12 der Deckelsektoren 3 eingerastet.

Der Klemmring 7 besitzt auf der vom Hülsenrohr 2 abgewandten Seite eine Nut 16. Fig. 1 bis 3 zeigen eine als Ringnut ausgeformte Nut 16. Beim Öffnen der Hülse greift ein Festhaltemechanismus möglichst formschlüssig in die Nut 16 ein und hält den Klemmring 7 fest, während ein Fördermechanismus die Hülse 1 weiterschiebt.

Der Gleitring 6 besitzt Ausnehmungen 13 (Fig. 1), die in Richtung Hülsenrohrende offen sein können, aber im vom Hülsenrohrende entfernten Teil eine in Umfangsrichtung verlaufende Begrenzung 15 (Fig. 1) aufweisen. Der Klemmring 7 besitzt Verdickungen, die in diese Ausnehmungen 13 eingreifen. Beim Öffnen gleiten die Verdickungen des Klemmrings 7 in den Ausnehmungen 13 des Gleitrings 6 parallel zur Längsachse 9 vom Hülsenrohrende weg. Dieses Wegbewegen des Klemmrings 7 vom Rohrende gibt die Bandfedern 8 frei und diese klappen die Deckelsektoren 3 von der Längsachse 9 weg. Damit dafür genug Platz zur Verfügung steht, ist im Klemmring 7 für jede Bandfeder 8 eine Ausnehmung 18 vorgesehen. Eie Hülse ist also selbstöffnend. Nach einer gewissen Wegstrecke sitzen die Verdickungen des Klemmrings 7 auf den Begrenzungen 15 der Ausnehmungen 13 auf. Dieses Aufsitzen erfolgt vorzugsweise in einem Formschluss. Z.B. besitzt die Verdickung des Klemmrings 7 eine Abschrägung, wobei das rohrferne Ende der Abschrägung vom Rohrende weiter entfernt ist als das rohrnahe, und die Begrenzung 15 ist gegengleich geformt. Während das Hülsenrohr 2 in weiterer Folge weiterbefördert wird, hält die Festhaltemechanik den Klemmring 7 samt Gleitring 6 fest und die achsennahen Enden der Deckelsektoren 3 gleiten achsenparallel entlang dem Hülsenrohr 2 von dessen Ende weg. Die Begrenzungen 14 in Umfangrichtung der Ausnehmungen 13 und die eingreifenden Verdickungen des Klemmrings 7 sind nahezu formschlüssig zueinander und achsparallel ausgebildet. Dies verhindert ein seitliches Verrutschen des Klemmrings 7 gegenüber dem Gleitring 6.

Am Hülsenrohr sind Wülste 10, hier in Form eines geschlossenen Rings (wie auch in Fig. 3 deutlich sichtbar) ausgeführt. Diese Wülste 10 bilden beim Schließen einen Endanschlag für den Gleitring 6. Sie verhindern ein Abheben des geschlossenen Deckels vom Hülsenrohr 2 in Schließstellung, da die Deckelsektoren 3 mit dem Gleitring 6 über die Bandfedern 8 verbunden sind.

Unter Bezugnahme auf Fig. 1 sollen noch einige Details erwähnt werden. So ist der im Achsschnitt sichtbare Schnappverschluss 17 durch zwei weitere Schnappverbindungen 21 ergänzt. Zweckmäßig ist es in diesem Fall, wenn im vom Hülsenrohrende entfernten Bereich des Gleitrings 6 eine Wartungsöffnung 22 vorgesehen ist, die im vom Hülsenrohrende am weitesten entfernten Bereich frei von einer Begrenzung durch den Gleitring 6 ist. Mit Hilfe solch einer Wartungsöffnung 22 kann eine Bandfeder 8, falls notwendig, entfernt werden.

In anderen Ausführungsformen können insbesondere die Bandfedern 8 samt ihren Befestigungen anders als eben beschrieben ausgeführt sein. Dabei können andere Befestigungsarten der Bandfedern 8 vorgesehen sein. So können auf den zweiten Teilbereichen 5 der Deckelsektoren 3 Deckel-Rastausnehmungen vorgesehen sein, in denen entsprechende Rastvorsprünge des deckelseitigen Endbereichs der Bandfedern 8 einrasten. Weiters können im Gleitring 6 Befestigungsausnehmungen vorgesehen sein, um die Bandfedern 8 am Gleitring 6 befestigen zu können.

## Patentansprüche

1. Hülse (1) für eine Rohrpostanlage mit einem Hülsenrohr (2), das mit mindestens einem Deckel, der aus mehreren Deckelsektoren (3) gebildet ist, verschlossen ist, wobei die Hülse (1) mittels eines Gleitrings (6) offenbar und schließbar ist, wobei der Gleitring (6) parallel zur Längsachse (9) der Hülse (1) bewegbar ist; die Deckelsektoren (3) aus je zwei Teilbereichen bestehen, nämlich aus einem ersten Teilbereich (4) und einem zweiten Teilbereich (5); die ersten Teilbereiche (4) in Schließstellung das Hülsenrohr (2) abschließen; die zweiten Teilbereiche (5) an die ersten Teilbereiche (4) angeformt sind und das Hülsenrohr (2) in einem Endabschnitt umfassen, **dadurch gekennzeichnet, dass** vom zweiten Teilbereich (5) aus zumindest je eine Bandfeder (8) anschließt und in einem Gleitring (6) fixiert ist, der das Hülsenrohr (2) umschließt; und dass ein Klemmring (7) die zweiten Teilbereiche (5) der Deckelsektoren (3) in Schließposition umgreift und so die Deckelsektoren (3) geschlossen hält.

2. Hülse nach Anspruch 1, **dadurch gekennzeichnet, dass** der Klemmring (7) rohrseitig Rastvorsprünge (11) aufweist und die Deckelsektoren im zweiten Teilbereich (5) gegengleiche Rastvertiefungen (12) aufweisen bzw. der Klemmring (7) die Vertiefungen aufweist und die Deckelsektoren (3) die Vorsprünge aufweisen, sodass in Schließstellung die Rastvorsprünge in den Rastvertiefungen einrasten.

3. Hülse nach einem der Ansprüche 1 oder 2, **dadurch gekennzeichnet, dass** der Gleitring (6) mindestens eine Ausnehmung (13) mit einer Begrenzung (15) auf der vom Ende des Hülsenrohrs abgewandten Seite aufweist und der Klemmring (7) rohrseitig mindestens eine Verdickung besitzt, die in der Ausnehmung (13) achsparallel verschiebbar ist, und dass beim Öffnen die Verdickung auf dieser Begrenzung (15) der Ausnehmung (13) des Gleitrings (6) in Aufsitz kommt und in der Offenstellung auf dieser Begrenzung (15) aufsitzt.

4. Hülse nach einem der Ansprüche 1 bis 3, **dadurch gekennzeichnet, dass** der Gleitring (6) mindestens eine Ausnehmung (13) aufweist, die achsparallele Begrenzungen (14)aufweist, und dass der Klemmring (7) rohrseitig zumindest eine Verdickung besitzt, die in der zumindest einen Ausnehmung (13) des Gleitrings in Umfangsrichtung formschlüssig eingreift.

5. Hülse nach Anspruch 1 bis 4, **dadurch gekennzeichnet, dass** der Klemmring (7) eine zum Rohrumfang parallele Nut (16) auf der dem Hülsenrohr (2) abgewandten Seite aufweist.

6. Hülse nach einem der Ansprüche 1 bis 5, **dadurch gekennzeichnet, dass** die Bandfedern (8) im Gleitring (6) mit einem unlösbaren Schnappverschluss (17) gehalten sind.

7. Hülse nach einem der Ansprüche 1 bis 6, **dadurch gekennzeichnet, dass** an den einzelnen Deckelsektoren (3) im zweiten Teilbereich (5) Hülsenringteile (19) aufgebracht sind.

8. Hülse nach einem der Ansprüche 1 bis 7, **dadurch gekennzeichnet, dass** zumindest ein Deckelsektor (3) im zweiten Teilbereich (5) eine Deckelvertiefung (20) aufweist, die zur Aufnahme eines Transponders geeignet ist.

9. Hülse nach einem der Ansprüche 1 bis 8, **dadurch gekennzeichnet, dass** die Deckelsektoren mit Dichtungen versehen sind.

10. Hülse (1) nach einem der Ansprüche 1 bis 9, **dadurch gekennzeichnet, dass** das Hülsenrohr (2) unmittelbar über dem Gleitring (6) in Schließstellung einen Wulst (10) aufweist.

11. Hülse nach einem der Ansprüche 1 bis 5 oder 7 bis 10, **dadurch gekennzeichnet, dass** der Gleitring (6) im vom Ende des Hülsenrohrs fernen Bereich Befestigungsausnehmungen, die zur Aufnahme von Befestigungsmitteln zur Befestigung der Bandfedern (8) geeignet sind, besitzt.

## Claims

1. A capsule (1) for a pneumatic mail system having a capsule tube (2), which is closed by at least one lid formed from a plurality of lid sectors (3), wherein the capsule (1) can be opened and closed by means of a slide ring (6), the slide ring (6) being movable parallel to the longitudinal axis (9) of the capsule (1); the lid sectors (3) consisting in each case of two sub-regions, namely of a first sub-region (4) and a second sub-region (5); the first sub-regions (4) closing off the capsule tube (2) in the closed position; the second sub-regions (5) being integrally formed on the first sub-regions (4) and surrounding the capsule tube (2) in an end portion, **characterised in that** at least one leaf spring (8) extends in each case from the second sub-region (5) and is secured in a slide ring (6) which surrounds the capsule tube (2); and **in that** a clamping ring (7) surrounds the second sub-regions (5) of the lid sectors (3) in the closed position and thus holds the lid sectors (3) closed.

2. A capsule according to Claim 1, **characterised in that** the clamping ring (7) has, on the side thereof facing the tube, latching projections (11), and the lid sectors have, in the second sub-region (5), matching latching depressions (12), or the clamping ring (7) has the depressions and the lid sectors (3) have the projections, so that, in the closed position, the latching projections latch into the latching depressions.

3. A capsule according to either of Claims 1 and 2, **characterised in that** the slide ring (6) has at least one cut-out (13) with a stop edge (15) on the side that is remote from the end of the capsule tube, and the clamping ring (7) has, on the side thereof facing the tube, at least one thickened portion which is displaceable in the cut-out (13) parallel to the axis, and **in that** when opening takes place, the thickened portion comes to rest on this stop edge (15) of the cut-out (13) of the slide ring (6) and in the open position rests on this stop edge (15).

4. A capsule according to any of Claims 1 to 3, **characterised in that** the slide ring (6) has at least one cut-out (13) that has axially parallel stop edges (14), and **in that** the clamping ring (7) has, on the side thereof facing the tube, at least one thickened portion which engages in a form-locking manner in the circumferential direction in the at least one cut-out (13) of the slide ring.

5. A capsule according to any of Claims 1 to 4, **characterised in that** the clamping ring (7) has a groove (16), parallel to the tube circumference, on the side that faces away from the capsule tube (2).

6. A capsule according to any of Claims 1 to 5, **characterised in that** the leaf springs (8) are held in the slide ring (6) by a non-detachable snap lock (17).

7. A capsule according to any of Claims 1 to 6, **characterised in that** capsule ring portions (19) are fitted to the individual lid sectors (3) in the second sub-region (5).

8. A capsule according to any of Claims 1 to 7, **characterised in that** at least one lid sector (3) in the second sub-region (5) has a lid depression (20) that is suitable for accommodating a transponder.

9. A capsule according to any of Claims 1 to 8, **characterised in that** the lid sectors are provided with seals.

10. A capsule (1) according to any of Claims 1 to 9, **characterised in that** the capsule tube (2) has a bead (10) which is directly above the slide ring (6) in the closed position.

11. A capsule according to any of Claims 1 to 5 or 7 to 10, **characterised in that** the slide ring (6) has, in the region that is remote from the end of the capsule, securing recesses that are suitable for accommodating securing means for securing the leaf springs (8).

## Revendications

1. Curseur (1) pour un système de transport par tube pneumatique pourvu d'une enveloppe de curseur (2) laquelle est fermée à l'aide d'au moins un couvercle formé de plusieurs segments de couvercle (3), ledit curseur (1) pouvant être ouvert et fermé au moyen d'une bague coulissant (6), la bague coulissante (6) pouvant être déplacée parallèlement à l'axe longitudinal (9) du curseur (1); chacun des segments de couvercle (3) étant constitué de deux zones partielles, à savoir d'une première zone partielle (4) et d'une deuxième zone partielle (5); les premières zones partielles (4) fermant l'enveloppe de curseur (2) dans la position de fermeture; les deuxièmes zones partielles (5) étant formées sur les premières zones partielles (4) tout en entourant une partie terminale de l'enveloppe de curseur (2), **caractérisé en ce que** chacune des deuxièmes zones (5) se prolonge par au moins un ressort-lamelle (8) qui est fixé dans une bague coulissante (6) laquelle entoure l'enveloppe de curseur (2); et qu'une bague de serrage (7) entoure les deuxièmes zones partielles (5) des segments de couvercle (3) dans la position de fermeture pour ainsi maintenir les segments de couvercle (3) fermés.

2. Curseur selon la revendication 1, **caractérisé en ce que** la bague de serrage (7) présente, du côté de l'enveloppe, des saillies d'encliquetage (11) et les segments de couvercle présentent, dans la deuxième zone partielle (5), des cavités d'encliquetage (12) correspondantes, ou bien la bague de serrage (7) présente lesdites cavités et les segments de couvercle (3) présentent lesdites saillies, pour faire en sorte qu'en position de fermeture, les saillies d'encliquetage viennent s'encliqueter dans les cavités d'encliquetage.

3. Curseur selon l'une des revendications 1 ou 2, **caractérisé en ce que** la bague coulissant (6) présente au moins un évidement (13) dont la limite (15) est située à l'opposé de l'extrémité de l'enveloppe de curseur alors que la bague de serrage (7) possède, du côté de l'enveloppe, au moins une surépaisseur pouvant être déplacée dans l'évidement (13) parallèlement à l'axe, et que ladite surépaisseur vient se poser, lors de l'ouverture, sur la limite (15) de l'évidement (13) de la bague coulissante (6) pour ainsi reposer, en position d'ouverture, sur la limite (15).

4. Curseur selon l'une des revendications 1 à 3, **caractérisé en ce que** la bague coulissante (6) présente au moins un évidement (13) pourvu de limites (14) orientées parallèlement à l'axe, et que la bague de serrage (7) possède, du côté de l'enveloppe, au moins une surépaisseur laquelle vient s'engager par complémentarité de forme, selon le sens circonférentiel, dans l'au moins un évidement (13) de la bague coulissante.

5. Curseur selon l'une des revendications 1 à 4, **caractérisé en ce que** la bague de serrage (7) présente, à l'opposé de l'enveloppe de curseur (2), une rainure (16) orientée parallèlement à la circonférence de l'enveloppe.

6. Curseur selon l'une des revendications 1 à 5, **caractérisé en ce que** les ressorts-lamelle (8) sont tenus dans la bague coulissante (6) au moyen d'un dispositif de verrouillage (17) à encliquetage irréversible.

7. Curseur selon l'une des revendications 1 à 6, **caractérisé en ce que** chacun des segments de couvercle (3) est pourvu, dans la deuxième zone partielle (5), d'éléments d'anneau de curseur (19).

8. Curseur selon l'une des revendications 1 à 7, **caractérisé en ce qu'**au moins un segment de couvercle (3) présente, dans la deuxième zone partielle (5), une cavité de couvercle (20) adaptée à recevoir un transpondeur.

9. Curseur selon l'une des revendications 1 à 8, **caractérisé en ce que** lesdits segments de couvercle sont pourvus de joints.

10. Curseur (1) selon l'une des revendications 1 à 9, **caractérisé en ce que** l'enveloppe de curseur (2) présente, en position de fermeture, un bourrelet (10) situé immédiatement en-dessus de la bague coulissante (6).

11. Curseur selon l'une des revendications 1 à 5 ou 7 à 10, **caractérisé en ce que**, dans la zone éloignée de l'extrémité de l'enveloppe de curseur, la bague coulissante (6) possède des évidements de fixation adaptés à recevoir des moyens de fixation destinés à fixer les ressorts-lamelle (8).
